## Europäisches Patentamt
## European Patent Office
## Office européen des brevets

(19)

(11) Veröffentlichungsnummer: **0 356 420**
**A2**

(12)

# EUROPÄISCHE PATENTANMELDUNG

(21) Anmeldenummer: **89890212.7**

(51) Int. Cl.⁵: **F 16 C 11/12**

(22) Anmeldetag: **11.08.89**

(30) Priorität: **24.08.88 AT 2078/88**

(43) Veröffentlichungstag der Anmeldung:
**28.02.90 Patentblatt 90/09**

(84) Benannte Vertragsstaaten: **CH DE FR GB LI**

(71) Anmelder: **Riessberger, Klaus, Dipl.-Ing. Dr.**
**Eustacchiogasse 70**
**A-8010 Graz (AT)**

(72) Erfinder: **Riessberger, Klaus, Dipl.-Ing. Dr.**
**Eustacchiogasse 70**
**A-8010 Graz (AT)**

(54) **Gelenk für kleine, räumliche Schwenkbewegungen.**

(57) Durch Hintereinander-Anordnung von um die Längsachse um 90 ° verdrehten Flachbiegestäben (2) (3) wird ein Gelenk für kleine räumliche Schwenkbewegungen gebildet, welches wartungsfrei ist und keine Verschiebungen in Achsrichtung erlaubt.

Fig. 1

EP 0 356 420 A2

## Beschreibung

### Gelenk für kleine, räumliche Schwenkbewegungen

In vielen maschinenbaulichen Anwendungen besteht das Problem, zwei Elemente räumlich schwenkbar miteinander zu verbinden, wobei zwischen den Elementen keine Relativverschiebungen in Verbindungsrichtung auftreten sollen. Üblicherweise werden hiezu Kugelgelenke verwendet, deren sphärische Teile die Verschwenkung in zwei aufeinander senkrechten Richtungen - und damit auch allen Zwischenlagen - zulassen, während der Abstand der verbundenen Elemente festgehalten ist. Solche Gelenke benötigen eine Schmierung - und damit einen laufenden Wartungsaufwand.

Wenn es sich bei den aufzunehmenden Bewegungen um "kleine" Bewegungen handelt, wird der Schmierstoff zwischen den berührenden Teilen entweder nicht ausreichend verteilt oder zwischen den Kontaktflächen herausgequetscht, sodaß vorzeitiger Verschleiß eintritt.

Diese beiden Punkte - Wartungsaufwand, vorzeitiger Verschleiß haben zur Konstruktion von "wartungsfreien" Gelenken geführt, bei denen zwischen den sphärischen Teilen eine Gummischicht einvulkanisiert ist. Diese ist in Tangentialrichtung weich und erlaubt daher die erwünschten kleinen Bewegungen, während sie in Radialrichtung wegen der geringen Dicke härter ist. Die Verschiebungen, die bei Kraftwirkung dennoch auftreten, sind im allgemeinen tolerierbar, bei manchen Anwendungen schließt diese Nachgiebigkeit jedoch die Verwendung derartiger Gelenke aus.

Die vorliegende Erfindung geht von einem Flachstab aus, der senkrecht zu seiner großen Querschnittserstreckung sehr leicht zu biegen ist. Durch die Querschnittsform entstehen bei einer solchen Verformung auch nur sehr geringe Spannungen, sodaß solche Flachstäbe schon lange als Ersatz eines einachsigen Bolzengelenkes für geringe Winkelbewegungen bekannt sind. In neuerer Zeit wurde dieses Prinzip sogar als Gelenk in Brückenpfeilern (Betongelenk) verwendet.

Es ist möglich, diesen Gedanken für ein räumliches Gelenk zu erweitern, indem in Richtung der gemeinsamen Achse (1-1) hinter einen Flachstab (2) mit der Querachse (4-4) ein zweiter gleichartiger Flachstab (3) mit der um 90° verdrehten Querachse (5-5) angesetzt wird.

Die Verbindung der beiden Querschnitte kann auf verschiedene Weise erfolgen, wovon hier ein tetraederartiges Mittelstück (6) (Fig.1), gesonderte Verbindungsteile (7) (Fig.2) oder eine Verbindung durch Schweißen oder Löten (8) (Fig.3) dargestellt sind.

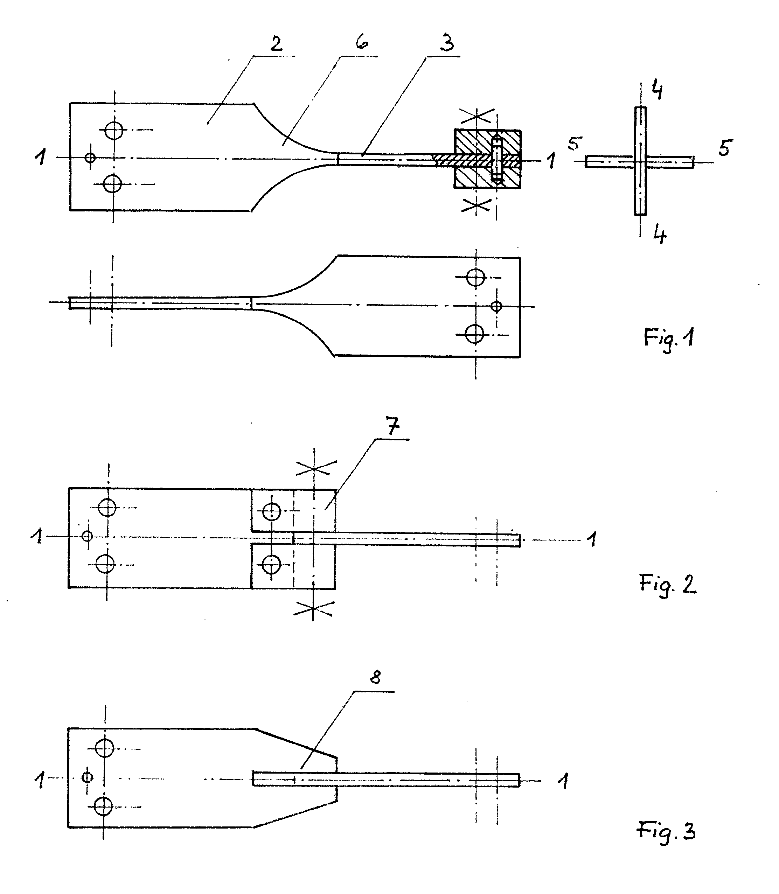

Dieses räumliche Gelenk erfüllt die vorangeführten Forderungen nach Wartungsfreiheit und Vermeidung von Verschiebungen in Achsialrichtung, wenn nur kleine Verschwenkungen ausgeführt werden sollen. Die Montage erfolgt leicht auf verschiedene Weise, wobei in Fig.2 beispielhaft eine Klemmung mit zusätzlichem Paßstift zum exakten Einbau dargestellt ist.

## Patentansprüche

1. Räumliches Gelenk für kleine Schwenkbewegungen,
**gekennzeichnet** durch Hintereinanderanordnung von zwei Flachprofilen mit gegeneinander um 90° verdrehten Querachsen.

Fig. 1

Fig. 2

Fig. 3